# EUROPÄISCHE PATENTANMELDUNG

(11) **EP 3 828 442 A1**
(43) Veröffentlichungstag der Anmeldung: **02.06.2021**
(21) Anmeldenummer: 19211553.3
(22) Anmeldetag: 26.11.2019
(51) Int. Cl.: F16H 49/00

(54) **GETRIEBE MIT EINEM FLEXIBLEN ZAHNRAD**

(71) Anmelder: Maxon International AG, 6072 Sachseln (CH)
(72) Erfinder: Zimmermann, Dirk, 79350 Sexau (DE)
(74) Vertreter: Grünecker Patent- und Rechtsanwälte PartG mbB

(57) **Zusammenfassung**

Die vorliegende Erfindung betrifft ein Getriebe mit einem Hohlrad, mit einem in dem Hohlrad angeordneten flexiblen Zahnrad und mit einem Wavegenerator, der mit dem flexiblen Zahnrad in Verbindung steht und der das flexible Zahnrad verformt, so dass es bereichsweise mit dem Hohlrad in Eingriff steht. Es ist die Aufgabe der vorliegenden Erfindung, ein derartiges Getriebe derart zu verbessern, dass Eingriffsstörungen in der Verzahnung und das Getriebespiel verringert, das Geräuschverhalten und die Leistungsübertragung verbessert und die Lebensdauer erhöht werden. Hierzu ist erfindungsgemäß vorgesehen, dass das flexible Zahnrad mindestens zwei in axialer Richtung nebeneinander angeordnete flexible Zahnradscheiben aufweist und jede Zahnradscheibe in Umfangsrichtung mindestens zwei Zahnsegmente umfasst, die mittels Federsegmente miteinander verbunden sind.

## Beschreibung

Die vorliegende Erfindung betrifft ein Getriebe mit einem Hohlrad, mit einem in dem Hohlrad angeordneten flexiblen Zahnrad und mit einem Wavegenerator, der mit dem flexiblen Zahnrad in Verbindung steht und der das flexible Zahnrad verformt, so dass es bereichsweise mit dem Hohlrad in Eingriff steht.

Derartige Getriebe sind bereits bekannt und werden beispielsweise in der Robotertechnik eingesetzt. Auch die Verwendung im Automobilbereich ist bekannt. So zeigt beispielsweise die WO 2016/165684 A2 ein Verstellgetriebe zum Verstellen zweier Bauteile mit einem Hohlrad, einem Mitnehmerrad, einem Wavegenerator und einem elastischen Stirnrad. Das elastische Stirnrad besteht aus mehreren identisch aufgebauten Zahnelementen. Jedes Zahnelement weist einen dem Hohlrad zugewandten Kopfbereich und einen dem Wavegenerator zugewandten Fußbereich auf. Die Kopfbereiche der Zahnelemente sind mit einer Verzahnung versehen, die mit dem Hohlrad in Kontakt kommen kann. Zudem weist jedes Zahnelement in seinem Kopfsegment eine nach außen offene Ausnehmung auf, die die Verzahnung unterbricht und mit einem Mitnehmerbolzen eines Mitnehmerrads in Kontakt steht. Nebeneinanderliegende Zahnelemente sind mittels elastischer Verbindungselemente miteinander verbunden. Der Wavegenerator ist im Wesentlichen elliptisch und bringt das elastische Stirnrad ebenfalls in eine elliptische Form, so dass zwei einander gegenüberliegende Bereiche des elastischen Stirnrads in Eingriff mit dem Hohlrad sind.

Bei einem derartigen Getriebe kann das zentrale flexible Zahnrad aufgrund von Lagerthematiken zur Hohlradachse verkippen, wodurch nicht die gesamte Zahnradbreite in Eingriff zur Drehmomentübertragung kommt, sondern nur ein gewisser Anteil der gesamten Zahnradbreite. Ferner können durch Fertigungstoleranzen Flankenrichtungsfehler entstehen, die dazu führen, dass ebenfalls nur ein Anteil der gesamten Zahnradbreite zum Tragen kommt. Durch Rundlauftoleranzen und weitere Fertigungstoleranzen kann es daher zu Eingriffsstörungen durch Geometrieabweichungen kommen.

Ausgehend von diesem Stand der Technik sollen nun ein oben beschriebenes Getriebe bzw. ein flexibles Zahnrad für das Getriebe weiter verbessert werden, sodass Eingriffsstörungen in der Verzahnung und das Getriebespiel verringert, das Geräuschverhalten und die Leistungsübertragung verbessert und die Lebensdauer erhöht werden.

Hierzu ist erfindungsgemäß vorgesehen, dass das flexible Zahnrad mindestens zwei in axialer Richtung nebeneinander angeordnete flexible Zahnradscheiben aufweist und jede Zahnradscheibe in Umfangsrichtung mindestens zwei Zahnsegmente umfasst, die mittels Federsegmenten miteinander verbunden sind.

Mit axialer Richtung ist im vorliegenden Kontext eine Richtung entlang der Hohlradachse gemeint. Dies entspricht im Wesentlichen der Richtung einer zentralen Getriebeachse. Durch diese Segmentierung des flexiblen Zahnrads in axialer Richtung in einzelne flexible Zahnradscheiben entspricht die Zahnbreite einer einzelnen flexiblen Zahnradscheibe maximal der Hälfte der Gesamtverzahnungsbreite. Ein Verkippen der einzelnen Zahnradscheiben relativ zur Hohlradachse bzw. zu einer zentralen Getriebeachse kann durch die anderen flexiblen Zahnradscheiben ausgeglichen werden. Dadurch wird der Eingriff des flexiblen Zahnrads über die gesamte Verzahnungsbreite erhöht und damit die Wahrscheinlichkeit einer nur teilweisen Zahnradüberdeckung bzw. von Kantenträgern signifikant reduziert. Die radiale Einzelflexibilität der einzelnen flexiblen Zahnradscheiben ermöglicht einen flexiblen Eingriff. Die einzelnen flexiblen Zahnradscheiben können also in Umfangsrichtung geringfügig zueinander verdreht sein, wodurch sich das Zahnspiel bis auf 0° reduzieren lässt. Die Leistungsübertragung, die Geräuschentwicklung und das Zahnspiel werden dadurch verbessert.

In einer vorteilhaften Ausführungsform kann vorgesehen sein, dass die in axialer Richtung nebeneinanderliegenden flexiblen Zahnradscheiben die gleiche Zähnezahl und die gleiche Zahngeometrie aufweisen. Durch die in axialer Richtung nebeneinanderliegenden flexiblen Zahnradscheiben wird daher ein breiteres flexibles Zahnrad ausgebildet. Da die Verzahnung des flexiblen Zahnrads aber in axialer Richtung aus einzelnen zueinander beweglichen Bereichen zusammengesetzt ist, nämlich der Verzahnung der einzelnen flexiblen Zahnradscheiben, können Eingriffsstörungen der einzelnen flexiblen Zahnradscheiben durch die anderen flexiblen Zahnradscheiben ausgeglichen werden, sodass insgesamt eine Verringerung der Eingriffsstörungen des gesamten flexiblen Zahnrads erreicht wird, was auch zu einem verringerten Getriebespiel und damit zu einem verbesserten Geräuschverhalten und längerer Lebensdauer führt.

Vorzugsweise kann ferner vorgesehen sein, dass die in axialer Richtung nebeneinanderliegenden flexiblen Zahnradscheiben aneinander anliegen. Auch dies führt dazu, dass durch die flexiblen Zahnradscheiben ein Gesamt-Zahnrad mit einer größeren Breite und den damit verbundenen Vorteilen ausgebildet wird.

Eine besonders einfache Ausgestaltung und ein gleichmäßiger Aufbau des flexiblen Zahnrads kann dadurch erzielt werden, dass die in axialer Richtung nebeneinanderliegenden flexiblen Zahnradscheiben in axialer Richtung die gleiche Verzahnungsbreite aufweisen.

In noch einer weiteren vorteilhaften Ausführungsform kann vorgesehen sein, dass das flexible Zahnrad mehr als zwei, vorzugsweise vier in axialer Richtung nebeneinanderliegende flexible Zahnradscheiben umfasst. Es hat sich gezeigt, dass bei einer Anzahl von vier in axialer Richtung nebeneinanderliegenden flexiblen Zahnradscheiben die Wahrscheinlichkeit einer nur teilweisen Zahnradüberdeckung bzw. des Auftretens von Kantenträgern sehr gering wird, was zu den oben aufgeführten Vorteilen führt.

In einer besonders vorteilhaften Ausgestaltung sind die flexiblen Zahnradscheiben als Gleichteile ausgeführt. Das flexible Zahnrad ist also durch vier in axialer Richtung nebeneinander angeordnete, identisch ausgebildete Einzelzahnräder, die flexiblen Zahnradscheiben, ausgebildet. Da die flexiblen Zahnradscheiben als Gleichteile ausgebildet sind, wird die Fertigung vereinfacht und es werden Kosteneinsparungen erzielt.

In noch einer weiteren Ausführungsform kann vorgesehen sein, dass mindestens eines der Zahnsegmente jeder flexiblen Zahnradscheibe eine Ausnehmung aufweist, wobei die flexiblen Zahnradscheiben derart angeordnet sind, dass die Ausnehmungen übereinander liegen und in den übereinanderliegenden Ausnehmungen ein Zapfenelement angeordnet ist, und jedes der Federsegmente der flexiblen Zahnräder eine Mittelebene aufweist, die eine zentrale Mittelachse des Getriebes beinhaltet und das jeweilige Federsegment in zwei Bereiche gleicher Länge unterteilt und jede Ausnehmung eine Mittelebene aufweist, die die zentrale Mittelachse des Getriebes beinhaltet und die Ausnehmung in zwei gleich große Bereiche unterteilt und die Mittelebene jedes Federsegments einen unterschiedlichen Abstand zu der auf jeder Seite der Mittelebene des Federsegments daneben liegenden Mittelebene der Ausnehmung aufweist. Hierdurch kann die Flexibilität der flexiblen Zahnradscheiben und somit des gesamten flexiblen Zahnrads erhöht werden, so dass insbesondere bei kleinen Durchmessern des Getriebes noch ausreichende elastische Verformungen der flexiblen Zahnradscheiben bzw. des flexiblen Zahnrads realisiert werden können. Da die Ausnehmungen in den einzelnen flexiblen Zahn-radscheiben übereinanderliegen und somit deckungsgleich sind, können die Zapfenelemente einfach eingeführt werden und erstrecken sich durch alle flexiblen Zahnradscheiben und damit durch das gesamte flexible Zahnrad.

Es kann ferner vorgesehen sein, dass mindestens eines der Zahnsegmente jeder flexiblen Zahnradscheibe in radialer Richtung des flexiblen Zahnrads eine Taillierung aufweist und die Federsegmente im Bereich der Taillierung an dieses Zahnsegment angreifen. Dadurch können die Federsegmente länger ausgestaltet werden, wodurch die Flexibilität der flexiblen Zahnradscheiben nochmals gesteigert wird, was insbesondere bei kleinen Durchmessern vorteilhaft ist.

Dabei sollten die Federsegmente derart ausgebildet sein, dass sie Elastizität in radialer Richtung aufweisen und in Tangentialrichtung steif sind. Somit wird eine Verformung der flexiblen Zahnradscheiben nur in radialer Richtung zugelassen. In tangentialer Richtung können Kräfte ohne Verformung der flexiblen Zahnradscheiben von einem Zahnsegment auf das benachbarte Zahnsegment übertragen werden. Dadurch wird ein Getriebespiel zwischen Getriebeeingang und Getriebeausgang möglichst klein gehalten. Dies kann besonders einfach dadurch ermöglicht werden, dass die Federsegmente als Stege ausgebildet sind, die benachbarte Zahnsegmente miteinander verbinden. Vorteilhafterweise sind die Federsegmente dann einteilig mit den Zahnsegmenten ausgebildet.

Um die Flexibilität der flexiblen Zahnradscheiben und damit auch des gesamten flexiblen Zahnrads weiter zu steigern, kann vorgesehen sein, dass das jede flexible Zahnradscheibe mindestens ein erstes Zahnsegment aufweist, das mit einer Ausnehmung versehen ist, und mindestens ein zweites Zahnsegment, dass keine Ausnehmung aufweist. Dadurch können die sich zwischen den Zahnsegmenten erstreckenden Federsegmente länger ausgestaltet werden und es wird eine gute Kombination aus Flexibilität und Festigkeit der Zahnsegmente erreicht. Die Verzahnungskraft des mindestens einen zweiten Zahnsegments, also des Zahnsegments ohne Ausnehmung, wird über die Federsegmente auf das mindestens eine erste Zahnsegment übertragen. Vorzugsweise sind die mit einer Taillierung versehenen Zahnsegmente die zweiten Zahnsegmente und weisen keine Ausnehmung auf.

In noch einer weiteren Ausführungsform greifen die Federsegmente auf Höhe der Ausnehmungen in dem mindestens einen ersten Zahnsegment an dem mindestens einen ersten Zahnsegment an. Dadurch erfolgt eine gute Übertragung der Verzahnungskräfte des mindestens einen zweiten Zahnsegments auf das mindestens eine erste Zahnsegment. Die Flexibilität der flexiblen Zahnradscheiben und damit des gesamten flexiblen Zahnrads kann weiter erhöht werden, wenn die Federsegmente in dem Bereich, in dem sie mit dem mindestens einen ersten Zahnsegment in Kontakt stehen, einen Freistich aufweisen.

Ferner kann vorgesehen sein, dass jede flexible Zahnradscheibe eine Mehrzahl von Zahnsegmenten, insbesondere mindestens vier Zahnsegmente, aufweist. Jede flexible Zahnradscheibe weist dann vorzugsweise eine gerade Anzahl von Zahnsegmenten auf, wobei die Hälfte der Zahnsegmente, die ersten Zahnsegmente, eine Ausnehmung aufweisen, und die andere Hälfte der Zahnsegmente, die zweite Zahnsegmente, ohne Ausnehmung ausgebildet sind. Hierdurch wird ein guter Kompromiss zwischen Flexibilität der flexiblen Zahnradscheiben und damit des flexiblen Zahnrads und ausreichender Festigkeit ermöglicht.

In einer besonders vorteilhaften Ausführungsform ist vorgesehen, dass das die Ausnehmung in den ersten Zahnsegmenten im Inneren des jeweiligen Zahnsegments angeordnet ist und eine geschlossene Kontur aufweist. Das in den Ausnehmungen angeordnete Zapfenelement rollt daher an der geschlossenen Umfangskontur ab, wodurch der Kontakt zwischen dem Zapfenelement und der Ausnehmung in den entsprechenden Zahnsegmenten nie unterbrochen ist. Dadurch wird die Laufruhe des Getriebes gesteigert. Die Ausnehmungen sind vorteilhafterweise im Wesentlichen elliptisch ausgeführt. Ferner können die Zahnsegmente dann in einem dem Hohlrad zugewandten Kopfbereich eine durchgehende Verzahnung aufweisen.

Gemäß noch einer weiteren Ausführungsform kann sich jedes der Zahnsegmente der flexiblen Zahnradscheiben an zwei Auflagepunkten auf dem Wavegenerator abstützen. Ein dem Wavegenerator zugewandter Fußbereich der Zahnsegmente ist dann konkav ausgebildet, sodass er nur an zwei Auflagepunkten mit dem Wavegenerator in Kontakt kommt. Der zwischen den zwei Auflagepunkten ausgebildete Bereich der Zahnsegmente ist, bedingt durch die konkave Form des Fußbereich der Zahnsegmente, vom Wavegenerator weg gekrümmt, sodass dort kein Kontakt zwischen den Zahnsegmenten und dem Wavegenerator stattfindet. Der Winkel zwischen den beiden Auflagepunkten beträgt vorzugsweise etwa 170°. Die Ausrichtung der Zahnsegmente normal zur Außenkontur des Wavegenerators kann dadurch verbessert werden.

In noch einer weiteren Ausführungsform ist vorgesehen, dass der Wavegenerator mindestens einen Nocken aufweist, der mit dem flexiblen Zahnrad in Kontakt steht, und der Nocken derart ausgebildet ist, dass die Zahnsegmente in dem Bereich, in dem sie mit dem Hohlrad in Eingriff stehen, derart verformt werden, dass sie einen Abschnitt eines imaginären Zahnrades mit einem konstanten Radius bilden, das sich um eine Achse dreht, die einen festgelegten Abstand zur zentralen Mittelachse des Getriebes aufweist.

In einer einfachen Ausgestaltung kann vorgesehen sein, dass die Zapfenelemente als Bolzen ausgebildet sind, die mit einer Abtriebswelle verbunden sind. Dadurch wird die Bewegung des flexiblen Zahnrads über die Bolzen auf eine gleichförmige Drehbewegung des Abtriebs übertragen. Vorzugsweise ist dabei auf jedem Bolzen eine Hülse angeordnet, sodass ein Gleitlager mit den damit verbundenen Vorteilen ausgebildet wird. Alternativ können auf jedem Bolzen auch eine elastische Hülse oder elastische O-Ringe angeordnet sein. Bei dieser Ausführungsvariante können die zugehörigen Ausnehmungen alternativ mit einem runden Querschnitt ausgeführt werden. In einer alternativen Ausführung sind die Zapfenelemente feststehend und das Hohlrad drehbar ausgeführt. Hierbei wird das Hohlrad durch den Eingriff des flexiblen Zahnrads angetrieben und dient entsprechend in dieser Variante als Abtriebselement.

In einer weiteren bevorzugten Ausführungsform sind die flexiblen Zahnradscheiben des flexiblen Zahnrads aus einem Metall oder einem metallischen Glas hergestellt. Weiter ist auch das mit dem flexiblen Zahnrad in Eingriff stehende Hohlrad bevorzugt aus Metall oder aus metallischem Glas hergestellt.

In einer bevorzugten Ausführungsform weist eine flexible Zahnradscheibe eine Dicke von ca. 1,5mm auf, so dass ein flexibles Zahnrad mit beispielsweise zwei in axialer Richtung nebeneinanderliegenden flexiblen Zahnradscheiben eine Dicke von ca. 3 mm und ein flexibles Zahnrad mit beispielsweise vier in axialer Richtung nebeneinanderliegenden flexiblen Zahnradscheiben eine Dicke von ca. 6 mm aufweist.

In einer weiteren bevorzugten Ausführungsform weist eine flexible Zahnradscheibe eine Dicke von ca. 3mm auf, so dass ein flexibles Zahnrad mit beispielsweise zwei in axialer Richtung nebeneinanderliegenden flexiblen Zahnradscheiben eine Dicke von ca. 6 mm und ein flexibles Zahnrad mit beispielsweise vier in axialer Richtung nebeneinanderliegenden flexiblen Zahn-radscheiben eine Dicke von ca. 12 mm aufweist.

Ferner bezieht sich die vorliegende Erfindung auch auf ein flexibles Zahnrad für ein oben beschriebenes Getriebe, wobei das flexible Zahnrad mindestens zwei, bevorzugt vier, in axialer Richtung nebeneinanderliegende flexible Zahnradscheiben umfasst, und wobei jede Zahnradscheibe in Umfangsrichtung mindestens zwei Zahnsegmente umfasst, die mittels Federsegmenten miteinander verbunden sind.

Das flexible Zahnrad umfasst also mehrere in axialer Richtung nebeneinanderliegende Einzelzahnräder, die flexiblen Zahnradscheiben. Durch diese Segmentierung des flexiblen Zahnrads in axialer Richtung in einzelne flexible Zahnradscheiben entspricht die Zahnbreite einer einzelnen flexiblen Zahnradscheibe maximal der Hälfte der Gesamtverzahnungsbreite. Ein Verkippen der einzelnen Zahnradscheiben, und damit des Verzahnungsbereichs der einzelnen Zahnradscheiben, relativ zur Hohlradachse bzw. zu einer zentralen Getriebeachse kann durch die anderen flexiblen Zahnradscheiben ausgeglichen werden. Dadurch wird der Eingriff des flexiblen Zahnrads über die gesamte Breite des flexiblen Zahnrads erhöht und damit die Wahrscheinlichkeit einer nur teilweisen Zahnradüberdeckung bzw. von Kantenträgern signifikant reduziert. Die radiale Einzelflexibilität der einzelnen flexiblen Zahnradscheiben ermöglicht einen flexiblen Eingriff. Die einzelnen flexiblen Zahnradscheiben können also in Umfangsrichtung geringfügig zueinander verdreht sein, wodurch sich das Zahnspiel bis auf 0° reduzieren lässt. Die Leistungsübertragung, die Geräuschentwicklung und das Zahnspiel werden dadurch verbessert.

In einer vorteilhaften Ausführungsform des flexiblen Zahnrads kann vorgesehen sein, dass mindestens eines der Zahnsegmente jeder flexiblen Zahnradscheibe eine Ausnehmung zur Aufnahme eines Zapfenelements aufweist, wobei die flexiblen Zahnradscheiben derart angeordnet sind, dass die Ausnehmungen übereinander liegen und wobei jedes der Federsegmente eine Mittelebene aufweist, die eine zentrale Mittelachse des flexiblen Zahnrads beinhaltet und das jeweilige Federsegment in zwei Bereiche gleicher Länge unterteilt und jede Ausnehmung eine Mittelebene aufweist, die die zentrale Mittelachse des flexiblen Zahnrads beinhaltet und die Ausnehmung in zwei gleich große Bereiche unterteilt und die Mittelebene jedes Federsegments einen unterschiedlichen Abstand zu der auf jeder Seite der Mittelebene des Federsegments daneben liegenden Mittelebene der Ausnehmung aufweist. Da die Ausnehmungen in den einzelnen flexiblen Zahnradscheiben übereinander liegen und somit deckungsgleich sind, können die Zapfenelemente einfach eingeführt werden und erstrecken sich durch alle flexiblen Zahnradscheiben und damit durch das gesamte flexible Zahnrad. Hierdurch kann die Flexibilität des flexiblen Zahnrads erhöht werden, so dass insbesondere bei kleinen Durchmessern des Getriebes noch ausreichende elastische Verformungen des Zahnrads realisiert werden können.

In einer weiteren bevorzugten Ausführungsform des flexiblen Zahnrads sind die flexiblen Zahn-radscheiben aus Metall oder aus metallischem Glas hergestellt.

In einer bevorzugten Ausführungsform des flexiblen Zahnrads weist eine flexible Zahnradscheibe eine Dicke von ca. 1,5mm auf, so dass ein flexibles Zahnrad mit beispielsweise zwei in axialer Richtung nebeneinanderliegenden flexiblen Zahnradscheiben eine Dicke von ca. 3 mm und ein flexibles Zahnrad mit beispielsweise vier in axialer Richtung nebeneinanderliegenden flexiblen Zahn-radscheiben eine Dicke von ca. 6 mm aufweist.

In einer weiteren bevorzugten Ausführungsform des flexiblen Zahnrads weist eine flexible Zahnradscheibe eine Dicke von ca. 3mm auf, so dass ein flexibles Zahnrad mit beispielsweise zwei in axialer Richtung nebeneinanderliegenden flexiblen Zahnradscheiben eine Dicke von ca. 6 mm und ein flexibles Zahnrad mit beispielsweise vier in axialer Richtung nebeneinanderliegenden flexiblen Zahnradscheiben eine Dicke von ca. 12 mm aufweist.

Im Folgenden wird die Erfindung anhand von Figuren näher beschrieben. Es zeigen:
Fig. 1: erfindungsgemäßes Getriebe,
Fig. 2: flexibles Zahnrad aus dem Getriebe aus Fig. 1,
Fig. 3: Vorderansicht einer flexiblen Zahnradscheibe des flexiblen Zahnrads aus Fig. 2,
Fig. 4: Detail der flexiblen Zahnradscheibe aus Fig. 3.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorhergehende oder auf nachfolgende Figurenbeschreibungen Bezug genommen.

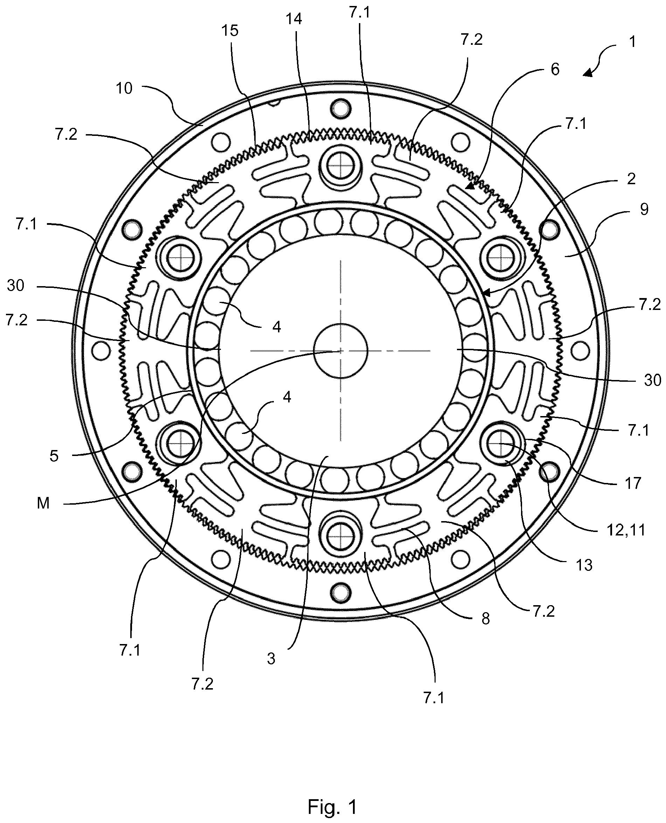

In Fig. 1 ist ein Ausführungsbeispiel eines Getriebes 1 der vorliegenden Erfindung gezeigt. Das Getriebe 1 umfasst ein Gehäuse 10, in dem ein Wavegenerator 2, ein flexibles Zahnrad 6 und ein feststehendes Hohlrad 9 angeordnet sind. Der Deckel des Gehäuses 10 ist abgenommen, um einen Einblick in das Innere des Getriebes zu gewähren. Das Getriebe 1 ist im Wesentlichen scheibenförmig mit einer zentralen Mittelachse M. Die zentrale Mittelachse M entspricht der Achse des Hohlrads 9.

Der Wavegenerator 2 umfasst einen Grundkörper 3, welcher näherungsweise einen elliptischen Querschnitt aufweist. Durch den näherungsweise elliptischen Querschnitt sind an dem Grundkörper 3 und damit an dem Wavegenerator 2 zwei Nocken 30 ausgebildet. Auf dem Grundkörper 3 sind Wälzkörper 4 angeordnet, die von einer verformbaren Hülse 5 umgeben sind. Der Wavegenerator 2 ist in dem flexiblen Zahnrad 6 angeordnet. Das flexible Zahnrad 6 ist daher über die verformbare Hülse 5 und die Wälzkörper 4 mit dem Grundkörper 3 in Kontakt. Die elliptische Form des Grundkörpers 3 des Wavegenerator 2 wird über die Wälzkörper 4 und die verformbare Hülse 5 auf das flexible Zahnrad 6 übertragen, so dass das flexible Zahnrad 6 elliptisch verformt und somit an zwei Eingriffsbereichen mit dem Hohlrad 9 in Kontakt gebracht wird.

Das flexible Zahnrad 6 umfasst mehrere Zahnsegmente 7.1, 7.2, die mittels flexibler Federsegmente 8 miteinander verbunden sind. Das flexible Zahnrad 6 ist mit einer Außenverzahnung 14 versehen, das feststehenden Hohlrad 9 weist eine Innenverzahnung 15 auf. Durch die elliptische Verformung des flexiblen Zahnrads 6 durch den Wavegenerator 3 steht die Außenverzahnung 14 des flexiblen Zahnrads 6 an zwei einander gegenüberliegenden Bereichen, den Eingriffsbereichen, mit der Innenverzahnung 15 des Hohlrads 9 in Eingriff.

Im dargestellten Ausführungsbeispiel umfasst das flexible Zahnrad 6 zwölf Zahnsegmente 7.1, 7.2, die in sechs erste Zahnsegmente 7.1 und sechs zweite Zahnsegmente 7.2 unterteilt sind. Die ersten Zahnsegmente 7.1 weisen je eine Ausnehmung 17 auf, die im Inneren des jeweiligen ersten Zahnsegments 7.1 als durchgehende Öffnung ausgebildet ist. In jeder Ausnehmung 17 ist jeweils ein Bolzen 12 des Zapfenelements 11 aufgenommen. Jeder Bolzen 12 ist von einer Hülse 13 umgeben, sodass ein Gleitlager ausgebildet wird. Die Bolzen 12 sind mit einer Abtriebswelle verbunden. Die Ausnehmungen 17 sind etwas größer als die Hülsen 13. Dadurch können die Bolzen 12 an den Ausnehmungen 17 abrollen. Im dargestellten Fall weisen die Ausnehmungen 17 einen elliptischen Querschnitt auf. Der Querschnitt der Bolzen 12 und der Hülsen 13 ist rund. Der Durchmesser der Ausnehmungen 17 ist etwas größer als der Außendurchmesser der Hülsen 13.

Der Wavegenerator 2 ist vorzugsweise mit einer Antriebswelle verbunden. Eine Drehung der Antriebswelle führt dazu, dass sich der Wavegenerator 2 dreht. Diese Drehbewegung wird auf das flexible Zahnrad 6 übertragen. Die Außenverzahnung 14 des flexiblen Zahnrads 6 läuft daher an der Innenverzahnung 15 des Hohlrads 9 ab. Die zwischen den Zahnsegmenten 7.1, 7.2 angeordneten Federsegmente 8 ermöglichen die flexible bzw. elastische Verformung des flexiblen Zahnrads 6. Die Bewegung des flexiblen Zahnrads 6 wird über die Bolzen 12 auf eine gleichförmige Drehbewegung des Abtriebs übertragen. Es könnte allerdings auch vorgesehen sein, dass die Bolzen mit dem Gehäuse verbunden und somit starr sind. In diesem Fall dient das Hohlrad als Abtrieb.

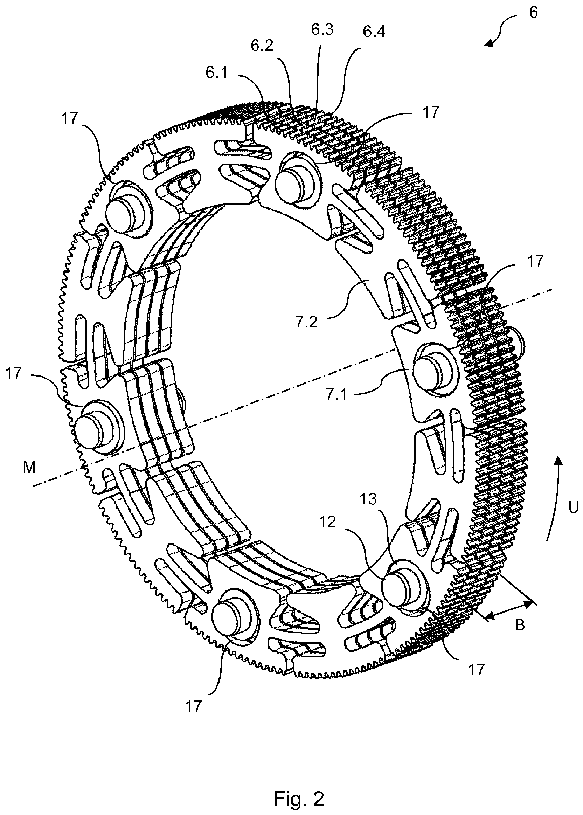

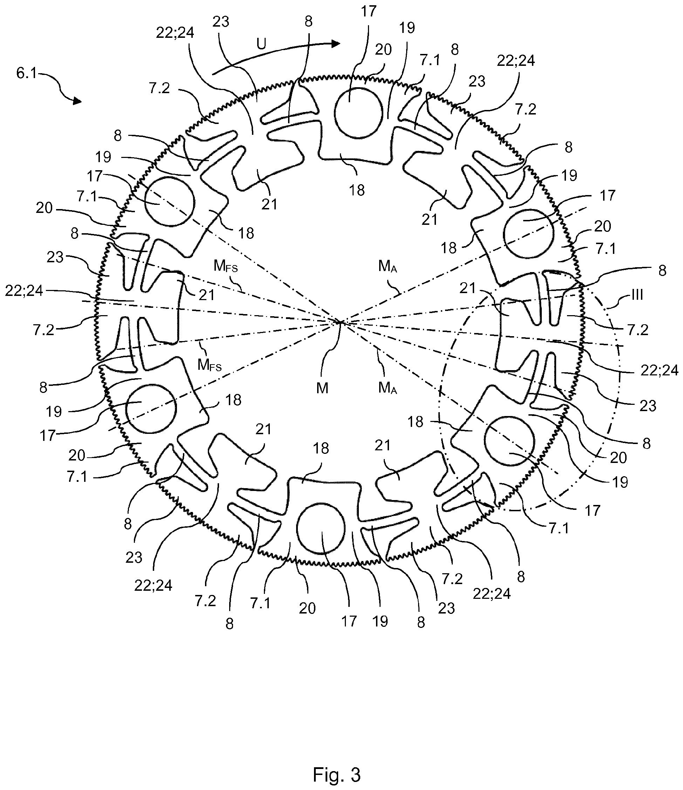

Fig. 2 zeigt das flexible Zahnrad 6 aus Fig. 1 in einer perspektivischen Darstellung. Das flexible Zahnrad 6 ist in axialer Richtung, also in Richtung der zentralen Mittelachse M, segmentiert ausgebildet. Damit ist gemeint, dass das flexible Zahnrad 6 in mehrere flexible Zahnradscheiben unterteilt ist, die in axialer Richtung nebeneinander angeordnet sind. Im dargestellten Ausführungsbeispiel umfasst das flexible Zahnrad 6 vier flexible Zahnradscheiben 6.1, 6.2, 6.3, 6.4. Es kann aber auch vorgesehen sein, dass das das flexible Zahnrad mehr oder weniger flexible Zahnradscheiben umfasst. Die flexiblen Zahnradscheiben 6.1 bis 6.4 sind als Gleichteile ausgebildet und somit identisch zueinander. Bevorzugt sind die flexiblen Zahnradscheiben aus Metall oder metallischem Glas hergestellt. Der Aufbau der flexiblen Zahnradscheiben wird im Folgenden mit Bezug auf Fig. 3 näher beschrieben.

In Fig. 3 ist eine Vorderansicht einer einzelnen flexiblen Zahnradscheibe 6.1 dargestellt. Die anderen flexiblen Zahnradscheiben 6.2 bis 6.4 sind identisch ausgebildet. Die folgende Beschreibung gilt also für alle flexiblen Zahnradscheiben 6.1 bis 6.4

Die flexible Zahnradscheibe 6.1 ist als Einzelzahnrad ausgebildet und umfasst erste Zahnsegmente 7.1 und zweites Zahnsegmente 7.2. Die ersten Zahnsegmente 7.1 und die zweiten Zahnsegmente 7.2 sind abwechselnd angeordnet und jeweils mittels Federsegmente 8 miteinander verbunden. Im dargestellten Ausführungsbeispiel umfasst die flexible Zahnradscheibe 6.1 zwölf Zahnsegmente 7.1, 7.2. Jedes zweite der Zahnsegmente, also die ersten Zahnsegmente 7.1, weisen eine Ausnehmung 17 auf. Im dargestellten Fall sind die Ausnehmungen 17 elliptisch. Die Ausnehmungen können allerdings auch kreisförmig sein. Die ersten Zahnsegmente 7.1 sind alle identisch zueinander ausgestaltet. Zwischen den ersten Zahnsegmenten 7.1 sind die zweiten Zahnsegmente 7.2 angeordnet. Die zweiten Zahnsegmente 7.2 weisen keine Ausnehmung auf. Benachbarte Zahnsegmente 7.1, 7.2 sind über die Federsegmente 8 miteinander verbunden. Die Federsegmente 8 sind als bogenförmige Stege ausgebildet, die sich entlang einer Kreislinie erstrecken, deren Mittelpunkt in dieser Ausführung auf der zentralen Mittelachse M des Getriebes 1 liegt.

Im Folgenden wird die Form der ersten Zahnsegmente 7.1 und der zweiten Zahnsegmente 7.2 genauer beschrieben:
Jedes erste Zahnsegment 7.1 weist einen Fußbereich 18 auf, mit dem es mit dem Wavegenerator 2 in Kontakt kommt. Ausgehend von dem Fußbereich 18 radial nach außen schließt sich ein Rumpfbereich 19 an, in dem die Ausnehmung 17 ausgebildet ist. Die Ausnehmung 17 weist also eine im Inneren des Zahnsegments 7.1 liegende, geschlossene Kontur auf. Auf dieser Kontur rollt der Bolzen 12 bzw. die Hülse 13 ab. Dadurch ist der Kontakt der Bolzen 12 bzw. der Hülse 13 zur Ausnehmung 17 nie unterbrochen, wodurch die Laufruhe des Getriebes 1 gesteigert wird. An den Rumpfbereich 19 schließt sich in radialer Richtung ein Kopfbereich 20 an. An der nach außen weisenden Umfangsfläche des Kopfbereichs 20 jedes ersten Zahnsegments 7.1 ist die Außenverzahnung 14 ausgebildet. Da die Ausnehmung 17 im Inneren des ersten Zahnsegment 7.1 angeordnet ist, erstreckt sich die Außenverzahnung 14 über die gesamte nach außen weisende Umfangsfläche des ersten Zahnsegments 7.1. Wird nun die Breite des ersten Zahnsegments 7.1 in Umfangsrichtung U der flexiblen Zahnradscheibe 6.1 betrachtet, so weist das erste Zahnsegment 7.1 im Fußbereich 18 eine erste Breite auf, die sich im Rumpfbereich verjüngt und nach außen hin wieder zunimmt, sodass das erste Zahnsegment 7.1 am äußeren Umfang die größte Breite aufweist.

Auch die zweiten Zahnsegmente 7.2 weisen einen Fußbereich 21 auf, der mit dem Wavegenerator2 in Kontakt kommt. An diesen Fußbereich 21 schließt sich auch bei den zweiten Zahnsegmenten 7.2 in radialer Richtung nach außen ein Rumpfbereich 22 an, der in einen Kopfbereich 23 übergeht. Die zweiten Zahnsegmente 7.2 weisen keine Ausnehmung auf. Stattdessen sind die zweiten Zahnsegmente 7.2 im Rumpfbereich 22 stark eingeschnürt und weisen also eine Taillierung 24 auf. Auch an der nach außen weisenden Umfangsfläche der Kopfbereiche 23 der zweiten Zahnsegmente 7.2 ist die Außenverzahnung 14 ausgebildet.

Jedes der Zahnsegmente 7.1, 7.2 ist über Federsegmente 8 mit den danebenliegenden Zahnsegmenten 7.2, 7.1 verbunden. Die Federsegmente 8 sind als bogenförmige Stege ausgebildet, die sich auf einer Kreislinie in Umfangsrichtung der flexiblen Zahnradscheibe 6.1 erstrecken. Die Federsegmente 8 greifen etwa in Höhe der Mitte der Ausnehmung 17 an die ersten Zahnsegmente 7.1 an. Die Verbindung zwischen den Federsegmenten 8 und den zweiten Zahnsegmenten 7.2 ist auf Höhe der Taillierung 24. Wie in Fig. 3 deutlich zu erkennen ist, ist die flexible Zahnradscheibe 6.1 einteilig ausgebildet.

Die zweiten Zahnsegmente 7.2, die keine Ausnehmung aufweisen, übertragen die Verzahnungskräfte über die Federelemente 8 auf die ersten Zahnsegmente 7.1 mit der Ausnehmung 17. Dadurch können die Federsegmente 8 größer gestaltet werden, wodurch die Flexibilität gesteigert wird und bei kleinerem Durchmesser des Getriebes 1 noch eine ausreichende elastische Verformung realisieren werden kann. Durch die dargestellte Form der Federelemente 8 ist sichergestellt, dass sie, soweit möglich, keine Elastizität in tangentialer Richtung aufweisen, sondern nur in radialer Richtung.

Jedes der Federsegmente 8 weist eine Mittelebene M_{FS} auf, die die zentrale Mittelachse M des Getriebes 1 beinhaltet und das jeweilige Federsegment 8 in zwei Bereiche gleicher Länge unterteilt. Da die Federsegmente 8 durch kreisbogenförmige Stege ausgebildet sind, entspricht diese Länge einer Bogenlänge. Auch jede der Ausnehmungen 17 weist eine Mittelebene M_{A} auf, die die zentrale Mittelachse des Getriebes 1 beinhaltet und die jeweilige Ausnehmung 17 in zwei gleich große Bereiche unterteilt. Die Federsegmente 8 zwischen den Zahnsegmenten 7.1, 7.2 sind asymmetrisch ausgebildet, in der Art, dass die Mittelebene M_{FS} jedes Federsegments 8 einen unterschiedlichen Abstand zu den beiden jeweils danebenliegenden Mittelebenen M_{A} der Ausnehmungen 17 aufweist. Die Mittelebene M_{FS} jedes Federsegments 8 und die Mittelebene M_{A} jeder Ausnehmung 17 schneiden sich in der zentralen Mittelachse M des Getriebes 1. Der Abstand der Mittelebene M_{FS} jedes Federsegments zu den beiden jeweils danebenliegenden Mittelebenen M_{A} lässt sich also durch Winkel ausdrücken, die unterschiedlich groß sind.

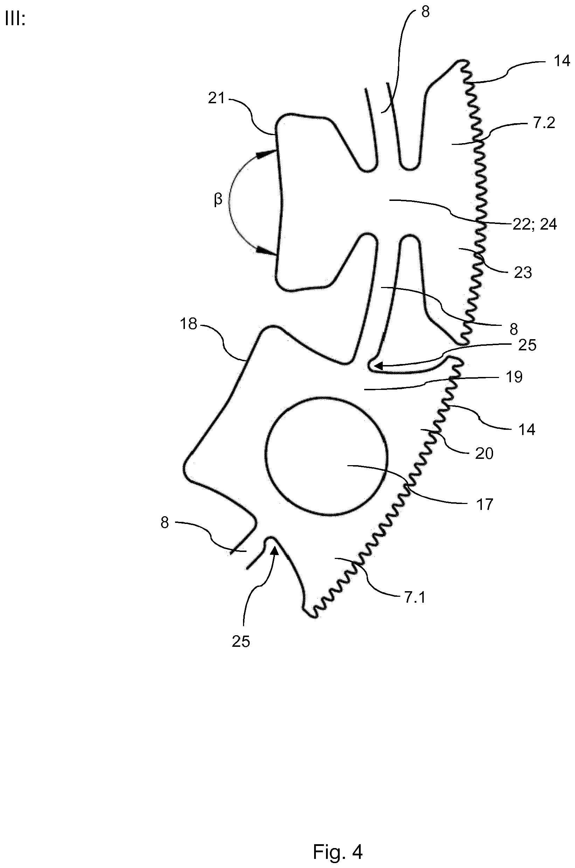

In Fig. 4 ist das Detail III aus Fig. 3 vergrößert dargestellt. Es sind ein erstes Zahnsegment 7.1 und ein zweites Zahnsegment 7.2 dargestellt. Wie bereits beschrieben, weist das erste Zahnsegment 7.1 einen Fußbereich 18, einen Rumpfbereich 19 und einen Kopfbereich 20 auf. Die Ausnehmung 17 liegt im Rumpfbereich 19 des ersten Zahnsegments 7.1. Im Kopfbereich 20 ist die Außenverzahnung 14 ausgebildet. Auch das zweite Zahnsegment 7.2 weist einen Fußbereich 21, einen Rumpfbereich 22, der eine Taillierung 24 aufweist, und einen Kopfbereich 23 auf. An der äußeren Umfangsfläche des Kopfbereichs 23 ist die Außenverzahnung 14 ausgebildet. Sowohl der Fußbereich 21 des zweiten Zahnsegments 7.2 als auch der Fußbereich 18 des ersten Zahnsegments 7.1 weist eine konkave Vertiefung aus, sodass sich jedes der Zahnsegmente 7.1, 7.2 mit zwei Auflagepunkten an dem Wavegenerator 2 abstützt. Dadurch wird die Ausrichtung der Zahnsegmente 7.1, 7.2 normal zur Außenkontur des Wavegenerators 2 verbessert. Diese konkave Vertiefung weist einen Öffnungswinkel β von etwa 170° auf.

Die Federsegmente 8 greifen etwa in Höhe der Ausnehmungen 17 an die ersten Zahnsegmente 7.1 an. In dem Bereich, an dem die Federsegmente 8 in die ersten Zahnsegmente 7.1 übergehen, weisen die Federsegmente 8 einen Freistich 25 auf. Durch diesen Freistich 25 kann die Flexibilität des flexiblen Zahnrads 6 im Übergangsbereich von den Federsegmenten 8 in die ersten Zahnsegmente 7.1 erhöht werden.

An die zweiten Zahnsegmente 7.2 greifen die Federsegmente 8 auf Höhe der Taillierung 24 an. Da die zweiten Zahnsegmente 7.2 in diesem Bereich eine sehr geringe Breite aufweisen, ist dort eine ausreichende Flexibilität gegeben. Die nebeneinanderliegenden Zahnsegmente 7.1, 7.2 sind sowohl im Kopfbereich als auch im Fußbereich beabstandet zueinander angeordnet.

Wie in Fig. 4 zu erkennen ist, können die ersten Zahnsegmente 7.1 eine andere Zähnezahl aufweisen als die zweiten Zahnsegmente 7.2. Die Zähnezahl des flexiblen Zahnrads 6 ist daher kein ganzzahliges Vielfaches der Anzahl der Zahnsegmente 7.1, 7.2. Die Anzahl der Zahnsegmente 7.1, 7.2 ist also nicht festgelegt durch die Zähnezahl des gesamten flexiblen Zahnrads 6. Somit ist die Anzahl und/oder die Anordnung der Zähne auf den Zahnsegmenten 7.1, 7.2 nicht zwingend einheitlich. Damit jeder Zahn auf den Zahnsegmenten 7.1, 7.2 die gleiche Form hat, kann die Geometrie des Wavegenerators 2, also die elliptische Querschnittsform mit zwei einander gegenüberliegenden Nocken, so gewählt sein, dass sich im Bereich des oberen Hochpunkts (Erhebung) ein konstanter Radius über den Winkel erstreckt, innerhalb dessen der Zahneingriff erfolgt. Dadurch ergeben alle sich innerhalb dieses Abschnitts, d.h. dieses Winkels, befindenden Zahnsegmente 7.1, 7.2 ein imaginäres Zahnrad mit dem konstanten Radius, welches sich um eine Achse dreht. Diese Achse weist einen bestimmten Abstand zur zentralen Mittelachse M des Getriebes 1 auf. Der Abstand weist hier ein Längenverhältnis von kleiner 10% zum Radius des Hohlrads auf. Die einzige Randbedingung ist, dass der Abstand der beiden äußeren Zähne, die auf benachbarten Getriebeelementen 7.1, 7.2 liegen, innerhalb dieses Bereichs ein ganzzahliges Vielfaches der Zahnweite ist. Die Zahnweite ist hier definiert als der doppelte Abstand zwischen zwei nebeneinanderliegenden Zähnen der Außenverzahnung 14.

Im Folgenden wird unter Bezug auf Fig. 2 der Aufbau des flexiblen Zahnrads 6 nochmals genauer beschrieben. Das flexible Zahnrad umfasst vier flexible Zahnradscheiben 6.1, 6.2, 6.3, 6.4. Die vier flexiblen Zahnradscheiben 6.1 bis 6.4 sind als Einzelzahnräder ausgebildet, wie in Bezug auf Fig. 3 und 4 bereits beschrieben. Die flexiblen Zahnradscheiben 6.1 bis 6.4 sind in axialer Richtung derart angeordnet, dass ihre Stirnflächen aneinander liegen. Dabei sind die flexiblen Zahnradscheiben 6.1 bis 6.4 in Umfangsrichtung derart ausgerichtet, dass die zweiten Zahnsegmente 7.2 aller flexiblen Zahnradscheiben 6.1 bis 6.4 übereinanderliegen. Ebenso liegen daher die ersten Zahnsegmente 7.1 aller flexiblen Zahnradscheiben 6.1 bis 6.4 übereinander. Dadurch sind auch die Ausnehmungen 17 aller flexiblen Zahnradscheiben 6.1 bis 6.4 im Wesentlichen deckungsgleich, sodass sie sich in axialer Richtung M durch gesamte Breite B des flexiblen Zahnrads 6 hindurch erstrecken. In den Ausnehmungen 17 sind die Hülsen 13 angeordnet, in denen die Bolzen 12 aufgenommen sind. Die flexiblen Zahnradscheiben 6.1 bis 6.4 stützen sich also einerseits in der Hohlradverzahnung und andererseits an den Bolzen 12 bzw. Zapfenelement 11 ab. Dadurch wird eine Drehmomentübertragung ermöglicht.

Die flexiblen Zahnradscheiben 6.1 bis 6.4 können jeweils einzeln senkrecht zur zentralen Mittelachse M leicht verkippt werden. Dadurch kann ein Verkippen einer der flexiblen Zahnradscheiben in Bezug auf die zentrale Mittelachse M bzw. die Hohlradachse, beispielsweise aufgrund von Lagerthematiken, durch die anderen flexiblen Zahnradscheiben ausgeglichen werden. Auch Flankenrichtungsfehler der einzelnen flexiblen Zahnradscheiben, die beispielsweise durch Fertigungstoleranzen bedingt sind, können durch die anderen flexiblen Zahnradscheiben ausgeglichen werden.

Da die flexiblen Zahnradscheiben 6.1 bis 6.4 auch jeweils in Umfangsrichtung leicht zueinander versetzt werden können, wird ein flexibler Eingriff der Zahneingriffsbereiche der einzelnen flexiblen Zahnradscheiben in die Hohlrad-Verzahnung ermöglicht, wodurch sich das Zahnspiel bis auf 0° reduzieren lässt.

### Bezugszeichenliste

- 1: Getriebe
- 2: Wavegenerator
- 3: Grundkörper
- 4: Wälzkörper
- 5: verformbaren Hülse
- 6: flexibles Zahnrad
- 6.1: Zahnradscheibe
- 6.2: Zahnradscheibe
- 6.3: Zahnradscheibe
- 6.4: Zahnradscheibe
- 7.1: erstes Zahnsegment
- 7.2: zweites Zahnsegment
- 8: Federsegmente
- 9: Hohlrad
- 10: Gehäuse
- 11: Zapfenelement
- 12: Bolzen
- 13: Hülse
- 14: Außenverzahnung
- 15: Innenverzahnung
- 17: Ausnehmung
- 18: Fußbereich erstes Zahnsegment
- 19: Rumpfbereich erstes Zahnsegment
- 20: Kopfbereich erstes Zahnsegment
- 21: Fußbereich zweites Zahnsegment
- 22: Rumpfbereich zweites Zahnsegment
- 23: Kopfbereich zweites Zahnsegment
- 24: Taillierung
- 25: Freistich
- M: zentrale Mittelachse Getriebe
- U: Umfangsrichtung
- B: Breite flexibles Zahnrad
- M_{FS}: Mittelebene Federsegment
- M_{A}: Mittelebene Ausnehmung
- β: Öffnungswinkel

## Patentansprüche

1. Getriebe (1) mit einem Hohlrad (9), mit einem in dem Hohlrad (9) angeordneten flexiblen Zahnrad (6) und mit einem Wavegenerator (2), der mit dem flexiblen Zahnrad (6) in Verbindung steht und der das flexible Zahnrad (6) verformt, so dass es bereichsweise mit dem Hohlrad (9) in Eingriff steht, **dadurch gekennzeichnet, dass** das flexible Zahnrad (6) mindestens zwei in axialer Richtung nebeneinander angeordnete flexible Zahnradscheiben (6.1, 6.2, 6.3, 6.4) aufweist und jede flexible Zahnradscheibe (6.1, 6.2, 6.3, 6.4) in Umfangsrichtung (U) mindestens zwei Zahnsegmente (7.1, 7.2) umfasst, die mittels Federsegmenten (8) miteinander verbunden sind.

2. Getriebe (1) nach Anspruch 1, **dadurch gekennzeichnet, dass** die in axialer Richtung nebeneinanderliegenden flexiblen Zahnradscheiben (6.1, 6.2, 6.3, 6.4) die gleiche Zähnezahl und die gleiche Zahngeometrie aufweisen.

3. Getriebe (1) nach mindestens einem der vorherigen Ansprüche, **dadurch gekennzeichnet, dass** die in axialer Richtung nebeneinanderliegenden flexiblen Zahnradscheiben (6.1, 6.2, 6.3, 6.4) aneinander anliegen.

4. Getriebe (1) nach mindestens einem der vorherigen Ansprüche, **dadurch gekennzeichnet, dass** die in axialer Richtung nebeneinanderliegenden flexiblen Zahnradscheiben (6.1, 6.2, 6.3, 6.4) in axialer Richtung die gleiche Verzahnungsbreite aufweisen.

5. Getriebe (1) nach mindestens einem der vorherigen Ansprüche, **dadurch gekennzeichnet, dass** das flexible Zahnrad (6) mehr als zwei, vorzugsweise vier in axialer Richtung nebeneinanderliegende flexible Zahnradscheiben (6.1, 6.2, 6.3, 6.4) umfasst.

6. Getriebe (1) nach mindestens einem der vorherigen Ansprüche, **dadurch gekennzeichnet, dass** die flexiblen Zahnradscheiben (6.1, 6.2, 6.3, 6.4) als Gleichteile ausgeführt sind.

7. Getriebe (1) nach Anspruch 6, **dadurch gekennzeichnet, dass** mindestens eines der Zahnsegmente (7.1) jeder flexiblen Zahnradscheibe (6.1, 6.2, 6.3, 6.4) eine Ausnehmung (17) aufweist, wobei die flexiblen Zahnradscheiben (6.1, 6.2, 6.3, 6.4) derart angeordnet sind, dass die Ausnehmungen (17) übereinander liegen und in den übereinanderliegenden Ausnehmungen (17) ein Zapfenelement (11) angeordnet ist, und jedes der Federsegmente (8) der flexiblen Zahnräder eine Mittelebene (M_{FS}) aufweist, die eine zentrale Mittelachse (M) des Getriebes (1) beinhaltet und das jeweilige Federsegment (8) in zwei Bereiche gleicher Länge unterteilt und jede Ausnehmung (17) eine Mittelebene (M_{A}) aufweist, die die zentrale Mittelachse (M) des Getriebes (1) beinhaltet und die Ausnehmung (17) in zwei gleich große Bereiche unterteilt und die Mittelebene (M_{FS}) jedes Federsegments (8) einen unterschiedlichen Abstand zu der auf jeder Seite der Mittelebene (M_{FS}) des Federsegments (8) daneben liegenden Mittelebene (M_{A}) der Ausnehmung (17) aufweist.

8. Getriebe (1) nach mindestens einem der vorherigen Ansprüche, **dadurch gekennzeichnet, dass** mindestens eines der Zahnsegmente (7.1, 7.2) jeder flexiblen Zahnradscheibe (6.1, 6.2, 6.3, 6.4) in radialer Richtung des flexiblen Zahnrads (6) eine Taillierung (24) aufweist und die Federsegmente (8) im Bereich der Taillierung (24) an dieses Zahnsegment (7.2) angreifen.

9. Getriebe (1) nach mindestens einem der vorherigen Ansprüche, **dadurch gekennzeichnet, dass** die Federsegmente (8) derart ausgebildet sind, dass sie Elastizität in radialer Richtung aufweisen und in Tangentialrichtung steif sind, vorzugsweise derart, dass die Federsegmente (8) als Stege ausgebildet sind, die benachbarte Zahnsegmente (7.1, 7.2) miteinander verbinden.

10. Getriebe (1) nach mindestens einem der Ansprüche 7 bis 10, **dadurch gekennzeichnet, dass** jede flexible Zahnradscheibe (6.1, 6.2, 6.3, 6.4) mindestens ein erstes Zahnsegment (7.1) aufweist, das mit einer Ausnehmung (17) versehen ist, und mindestens ein zweites Zahnsegment (7.2), dass keine Ausnehmung aufweist.

11. Getriebe (1) nach mindestens einem der Ansprüche 7 bis 11, **dadurch gekennzeichnet, dass** die Federsegmente (8) auf Höhe der Ausnehmungen (17) in dem mindestens einen ersten Zahnsegment (7.1) an das mindestens eine erste Zahnsegment (7.1) angreifen.

12. Getriebe (1) nach mindestens einem der vorherigen Ansprüche, **dadurch gekennzeichnet, dass** jede flexible Zahnradscheibe (6.1, 6.2, 6.3, 6.4) eine Mehrzahl von Zahnsegmenten (7.1, 7.2), insbesondere mindestens vier Zahnsegmente (7.1, 7.2), aufweist.

13. Getriebe (1) nach mindestens einem der vorherigen Ansprüche, **dadurch gekennzeichnet, dass** die Ausnehmung (17) in den ersten Zahnsegmenten (7.1) im Inneren des jeweiligen Zahnsegments (7.1) angeordnet ist und eine geschlossene Kontur aufweist.

14. Flexibles Zahnrad (6) für ein Getriebe (1) nach einem der Ansprüche 1 bis 13, umfassend mindestens zwei, bevorzugt vier in axialer Richtung nebeneinanderliegende flexible Zahnradscheiben (6.1, 6.2, 6.3, 6.4), wobei jede flexible Zahnradscheibe (6.1, 6.2, 6.3, 6.4) in Umfangsrichtung mindestens zwei Zahnsegmente (7.1, 7.2) umfasst, die mittels Federsegmenten (8) miteinander verbunden sind

15. Flexibles Zahnrad (6) nach Anspruch 14, **dadurch gekennzeichnet, dass** mindestens eines der Zahnsegmente (7.1) jeder flexiblen Zahnradscheibe (6.1, 6.2, 6.3, 6.4) eine Ausnehmung (17) zur Aufnahme eines Zapfenelements aufweist, wobei die flexiblen Zahnradscheiben (6.1, 6.2, 6.3, 6.4) derart angeordnet sind, dass die Ausnehmungen (17) der flexiblen Zahnradscheiben (6.1, 6.2, 6.3, 6.4) übereinanderliegen, und wobei jedes der Federsegmente (8) eine Mittelebene (M_{FS}) aufweist, die eine zentrale Mittelachse (M) des Getriebes (1) beinhaltet und das jeweilige Federsegment (8) in zwei Bereiche gleicher Länge unterteilt und jede Ausnehmung (17) eine Mittelebene (M_{A}) aufweist, die die zentrale Mittelachse (M) des Getriebes (1) beinhaltet und die Ausnehmung (17) in zwei gleich große Bereiche unterteilt und die Mittelebene (M_{FS}) jedes Federsegments (8) einen unterschiedlichen Abstand zu der auf jeder Seite der Mittelebene (M_{FS}) des Federsegments (8) daneben liegenden Mittelebene (M_{A}) der Ausnehmung (17) aufweist.
